# FASCICULE DE BREVET EUROPEEN

(11) **EP 4 338 079 B1**
(45) Date de publication et mention de la délivrance du brevet: **02.07.2025**
(21) Numéro de dépôt: 22728189.6
(22) Date de dépôt: 09.05.2022
(51) Int. Cl.: G06F 21/57

(54) **PROCÉDÉ POUR SÉCURISER L'UTILISATION D'UN LOGICIEL**
VERFAHREN ZUR SICHERUNG DER BENUTZUNG VON SOFTWARE
METHOD FOR SECURING THE USE OF SOFTWARE

(30) Priorité: 10.05.2021 FR 2104932
(43) Date de publication de la demande: 20.03.2024
(73) Titulaire: Marbeuf Conseil et Recherche, 75009 Paris (FR)
(72) Inventeur: SANGLE-FERRIERE, Bruno, 75016 PARIS (FR)
(74) Mandataire: Ipsilon NNY
(86) Numéro de dépôt international: PCT/EP2022/062406
(87) Numéro de publication internationale: WO 2022/238288

(56) Documents cités:
- WO-A1-2016/081404
- US-A1- 2013 198 530
- US-B1- 9 712 153

## Description

### Domaine technique

La présente invention concerne les procédés et produits programmes d'ordinateur pour sécuriser l'utilisation d'un logiciel destiné à être exécuté par un processeur électronique d'un appareil.

### Technique antérieure

Les processeurs électroniques exécutent lors de leur mise sous tension un logiciel de démarrage, placé en mémoire morte ou en mémoire persistante, mais dont le contenu peut être modifié. Ceci offre la possibilité au vendeur du processeur de pouvoir mettre à jour le logiciel de démarrage au fil du temps, comme expliqué notamment dans le brevet US 5 944 821. Cela permet également à un vendeur ou revendeur du processeur de pouvoir moduler les utilisations possibles dudit processeur en le chargeant de logiciels de démarrage différents.

Cette flexibilité ouvre cependant la voie à des remplacements de logiciels illicites pouvant entrainer des mal fonctions du processeur voire le vol ou la corruption de données auxquelles le processeur a accès. Cela concerne tout type de logiciel, notamment les logiciels de démarrage, mais également des logiciels utilisés notamment pour la vérification de signatures de logiciels. Il est ainsi important de distinguer et/ou d'empêcher une installation ou modification dite illicite, par opposition à une installation licite correspondant à la première installation d'un logiciel ou à une modification déjà installée, approuvées par la version du logiciel déjà installée ou par un autre logiciel installé de façon licite.

Ces risques d'attaque sont parfois limités par l'adjonction d'un autre processeur lié au processus de démarrage qui vérifie que l'éditeur du logiciel est légitime. Cette vérification peut aussi être faite par le processeur protégé lui-même, qui exécutera alors au démarrage un logiciel de vérification de l'éditeur d'un deuxième logiciel de démarrage, qui ne sera alors exécuté que si le premier logiciel le permet, cette permission étant donnée après la vérification de l'identité de l'éditeur du deuxième logiciel.

Ces vérifications sont cependant généralement faites par la vérification de la signature du logiciel vérifié, la signature dudit logiciel comportant généralement le mot secret, ou hash, du logiciel, ce hash étant crypté de telle sorte que seul l'émetteur légitime puisse avoir le hash décrypté par le logiciel de vérification.

Une autre méthode de vérification du logiciel de démarrage consiste à disposer en sus d'un logiciel de vérification du logiciel de démarrage, d'un registre dans lequel est déposé le hash légitime grâce auquel le logiciel de démarrage sera vérifié au prochain démarrage du logiciel ; ce hash légitime pouvant être mis à jour par exemple par une fonction incluse dans le logiciel de démarrage initial.

Ces techniques sont cependant toutes contournables s'il est possible de créer à dessein des logiciels ayant le même hash que le logiciel légitime, comme divulgué dans la demande US 2010/0185845. Cette faculté est malheureusement possible, les méthodes de cryptage connues MD5 et Sha1 étant contrefaisables. WO2016/081404 A1 fait partie de l'art antérieur.

La venue des ordinateurs quantiques devrait permettre par ailleurs aussi de contrefaire les mots cryptés et rendra donc ces vérifications de logiciels encore plus contournables.

Les modifications illicites des logiciels sont particulièrement pénalisantes pour les processeurs électroniques enregistrés auprès d'autres appareils ou processeurs, notamment au sein d'un réseau ou parc, car rendant leur enregistrement caduc si leur logiciel est remplacé par un logiciel illicite.

### Exposé de l'invention

Il existe un besoin pour améliorer la sécurisation et la protection des processeurs électroniques ou de leur utilisation, afin d'offrir en particulier une méthode permettant de surmonter les inconvénients des méthodes connues.

### Résumé de l'invention

### Procédé

L'invention a pour but de répondre à ce besoin et elle y parvient, selon l'un de ses aspects, grâce à un procédé pour sécuriser l'utilisation d'un logiciel destiné à être exécuté par un processeur électronique d'un appareil, ledit processeur électronique comprenant ou ayant accès au moins à
- un premier registre sur lequel se trouve au moins une information associée préalablement générée et nécessaire pour accéder à des données utilisées par ledit logiciel et/ou pour crypter ou décrypter des données de communication avec un autre appareil destinées au ou issues du logiciel, et à
- un deuxième registre contenant au moins un fichier du logiciel et/ou des données nécessaires à l'identification ou au cryptage d'un fichier dudit logiciel, notamment un hash,
procédé dans lequel, lors de toute modification du deuxième registre ou toute requête en modification dudit deuxième registre, le premier registre est réinitialisé ou ladite au moins une information associée du premier registre est modifiée de façon prédéfinie, de telle sorte que, afin d'accéder à des données utilisées par et/ou issues dudit logiciel, une modification ultérieure du premier registre soit autorisée suite à cette réinitialisation ou à cette première modification par une instruction du logiciel ayant initié la modification du deuxième registre ou par un logiciel autorisé déterminé au préalable.

Grâce à l'invention, l'utilisation du logiciel est ainsi sécurisée : d'une part , les communications gérées par le logiciel pour le processeur électronique en provenance ou à destination d'un autre appareil ne peuvent plus être cryptées avec des clés échangées avec l'autre appareil si ledit logiciel n'a pas lui-même initié son propre changement ou a été approuvé par un logiciel autorisé; d'autre part, les données cryptées par l'information associée présente sur le premier registre, dit registre de sureté, n'est plus accessible au logiciel si il n'a pas lui-même initié son propre changement ou par un logiciel autorisé, ladite information ayant été effacée ou modifiée.

Par « *logiciel autorisé déterminé au préalable* », il faut comprendre un logiciel autorisé reconnu par le processeur électronique et/ou l'appareil.

Dans un mode de réalisation préféré de l'invention, le procédé utilise un circuit électronique, incorporé dans ou connecté audit processeur électronique, configuré au moins pour détecter toute modification du deuxième registre, dit registre exécutable, ou toute requête en modification dudit deuxième registre, et pour, suite à cette détection, réinitialiser le premier registre ou modifier d'une façon prédéfinie ladite au moins une information associée du premier registre.

Dans une variante, le procédé selon l'invention est réalisé de manière automatique par des instructions de code exécutées par un ou plusieurs processeurs.

De préférence, le premier registre est remis à zéro lors de toute modification du deuxième registre ou toute requête de modification dudit deuxième registre. Dans une variante, ledit premier registre est remis à une valeur prédéfinie autre que zéro.

Ladite au moins une information associée du premier registre peut être effacée et/ou regénérée, notamment lors de la mise à jour ou de l'installation dudit logiciel.

Ladite au moins une information associée du premier registre peut être modifiée par une valeur connue ou générée par ledit processeur électronique de l'appareil, ou par une valeur transmise à l'appareil, ou par une valeur connue au préalable et/ou transmise à un serveur ou à un autre appareil d'un réseau au sein duquel l'appareil évolue.

### Logiciel à sécuriser

Dans la suite, le terme « *logiciel* » est utilisé, mais l'invention peut également s'appliquer à une application destinée à être exécutée par un processeur électronique.

Ledit logiciel est de préférence un logiciel de démarrage du processeur électronique.

Ledit logiciel de démarrage du processeur peut être enregistré dans une mémoire persistante d'un registre. Par « *mémoire persistante* », il faut comprendre que ledit registre est modifiable mais conserve l'information même quand il n'est plus alimenté par un courant électrique, par opposition à une mémoire vive ou morte.

Dans une variante ou en combinaison, ledit logiciel est un logiciel de gestion, assurant la gestion d'un ou plusieurs autres logiciels tiers, configuré notamment pour répertorier ce ou ces logiciels tiers dans l'appareil, les remplacer par de nouvelles versions, sécuriser leurs communications avec d'autres appareils ou de signer ou crypter des documents. Dans ce cas, les données secrètes nécessaires à ces opérations sont effacées si le logiciel de gestion est modifié par ailleurs.

Le processeur électronique de l'appareil comporte alors ou a avantageusement accès à un registre commutateur, contenant au moins, pour chacun de ces autres logiciels tiers, l'identifiant des premier et deuxième registres dits registres de sureté et registres exécutables de chacun de ces logiciels. Ledit logiciel de gestion autorisé est configuré avantageusement pour vérifier la version du logiciel à installer et/ou à mettre à jour, pour modifier le deuxième registre dit registre exécutable puis le premier registre dit registre de sureté associés au logiciel à mettre à jour et pour mettre à jour le registre commutateur, après vérification de l'exactitude des registres de sureté et des registres exécutables associés au logiciel mis à jour.

Si le logiciel mis à jour contient des fonctionnalités de communication sécurisée avec un dispositif électronique externe, les nouvelles clés utilisées pour la version installée sont de préférence communiquées par le logiciel qui effectue la mise à jour et donc éventuellement le logiciel dit de gestion avant ou pendant la mise à jour ; ces données secrètes étant avantageusement communiquées lors de l'installation de la nouvelle version.

Ledit logiciel destiné à être exécuté par le processeur électronique de l'appareil peut initier sa propre mise à jour et ainsi rendre disponible une autre version de lui-même à l'appareil. Dans ce cas, ledit logiciel vérifie de préférence la validité de ladite autre version, par exemple en vérifiant la signature électronique dudit logiciel s'il connait une clé publique authentique de l'éditeur du logiciel, par exemple enregistrée dans le premier registre dit de sureté, ou par la méthode du hash aléatoire, le nombre de mélange et la clé de chiffrement du hash étant par exemple des clés à usage unique inscrites sur ledit premier registre avant sa mise à jour. Un circuit électronique dédié peut être installé sur le microprocesseur pour effectuer ces vérifications sans transmettre au processeur, ou aux autres parties du processeurs, les informations associées secrètes contenues dans le registre de sureté, et notamment la ou les clés à usage unique et le ou les nombres de mélanges utilisés par la procédure du hash aléatoire.

### Information associée

Ladite au moins une information associée du premier registre peut comporter au moins une ou plusieurs clés de cryptage, notamment des clés symétrique, asymétriques, publiques, privées, à usage unique, ou des séries de clés à usage unique. Dans une variante, ladite au moins une information associée comporte au moins un ou plusieurs nombres ayant été générés aléatoirement, notamment des nombres aléatoires dits « mélangeurs » tels que décrits dans le brevet du hash aléatoire .

Ces informations associées servent, entre autres, à sécuriser les communications avec d'autres appareils, ou à crypter, décrypter ou vérifier l'authenticité de données utilisées par ledit logiciel.

L'information associée peut contenir d'autres informations, notamment la date et l'heure de la modification ou du dépôt du fichier du logiciel sur l'appareil, et/ou un identifiant permettant d'identifier la nouvelle et l'ancienne version dudit fichier, leurs dates de création, leurs noms, leurs éditeurs, leurs hash et leurs signatures émises par leur propre éditeur ainsi que la clé publique de l'éditeur utilisée pour ladite signature.

La ou les informations associées sont de préférence protégées pour ne pas pouvoir être modifiées en dehors de la procédure de mise à jour et de dépôts des fichiers de logiciel auxquels elles sont associées.

La ou les informations associées sont de préférence protégées pour ne pouvoir être utilisées que par le logiciel auquel le registre est associé ou le logiciel de gestion.

La ou les informations associées sont de préférence protégées pour ne pouvoir être utilisées que par des circuits électroniques permettant le cryptage, décryptage et la vérification de signatures sans révéler le contenu dédit registre de sureté au reste du circuit électronique ou à d'autres circuits électroniques.

Dans le cas de clés de cryptage privées, la ou les informations associées peuvent être générées par le logiciel lui-même dans son ancienne version, avant sa propre mise à jour.

Dans le cas de clés de cryptage publiques ou à usage unique, elles peuvent provenir d'un dispositif électronique distant avec lequel l'appareil communique à l'aide dudit logiciel avant sa mise à jour, ou être créées par l'appareil lui-même pour leur être communiquées. D'autres informations peuvent cependant être accessibles à la requête dudit appareil ou du logiciel auquel il est associé. Enfin les autres informations, telles que par exemple la date de modification du fichier, laissées accessibles publiques sont de préférence inscrites en tant qu'informations associées sur le registre exécutable.

La modification ou une écriture sur le deuxième registre peut entrainer ou nécessiter la mise à zéro ou la modification de l'information associée inscrite sur le premier registre.

Le dispositif comporte de préférence un générateur de clés de cryptage symétriques, asymétriques et à usage unique permettant d'enregistrer sur le registre de sureté de telles clés, de préférence ne communiquant pas par ailleurs la clé privée de la paire de clés asymétriques au reste du processeur ou à aucun autre circuit électronique, le cas échéant, et ne communiquant les autres clés, notamment les clés de cryptage symétriques et à usage unique, que de façon cryptée et en utilisant des clés présentes sur le registre de sureté associé au même logiciel dans sa version existante ou bien au logiciel de gestion.

### Registres

Dans un mode de réalisation de l'invention, le deuxième registre contient au moins un fichier du logiciel.

Dans une variante, un fichier du logiciel étant enregistré sous forme cryptée sur un troisième registre, le deuxième registre comporte au moins une ou plusieurs clés de cryptage servant au décryptage et/ou à la vérification de la signature dudit fichier crypté, notamment une clé symétrique ou asymétrique.

De préférence, seul le logiciel de gestion ou le logiciel dont un fichier est contenu dans le deuxième registre ou dont la signature est inscrite sur le deuxième registre peut être autorisé à modifier ou est capable de modifier ledit deuxième registre.

Dans une variante, seul le logiciel de gestion ou le logiciel effectuant sa propre mise à jour sont autorisés à modifier le registre commutateur, et, de préférence, sont capables d'interdire l'écriture sur le registre exécutable lors de sa vérification et jusqu'à ce que le registre commutateur correspondant au dit logiciel ait été mis à jour.

Dans une variante, un fichier du logiciel étant enregistré sur un troisième registre, le premier registre comporte au moins une clé de cryptage et un nombre secret aléatoire ayant été mélangé ou concaténé au fichier du logiciel enregistré dans le troisième registre, et le deuxième registre comporte en outre au moins un mot haché, dit « le hash », crypté au moyen de ladite clé de cryptage contenue dans le premier registre, du fichier résultant du mélange ou de la concaténation. Cela offre un niveau de sécurité très élevé pour vérifier que le logiciel dont le fichier est sur le troisième registre est bien celui déposé initialement et qui a donné lieu aux données du deuxième registre, notamment si l'on restreint dans le temps le nombre d'essais de décryptage, la seule solution étant d'essayer avec tous les nombres aléatoires possibles pour pouvoir falsifier le fichier.

De préférence, chacun des logiciels sont exécutés sur un processeur ou un processeur virtuel indépendant.

### Identification au sein d'un réseau

Ladite au moins une information associée du premier registre peut être nécessaire à l'identification dudit processeur dans un réseau au sein duquel évolue l'appareil.

Ladite au moins une information associée du premier registre peut être nécessaire à la communication avec un ou plusieurs serveurs du réseau et/ou un ou plusieurs autres appareils du réseau.

Dans le cas où le logiciel est modifié et le deuxième registre est ou doit être modifié, entrainant la modification du premier registre, l'appareil peut alors s'identifier auprès des autres appareils du réseau au sein duquel ils évoluent uniquement s'il a pu leur communiquer, lors d'une dernière utilisation du logiciel avant modification, des informations qui leur permettront de communiquer quand l'appareil redémarre avec le logiciel après modification. L'appareil peut alors utiliser le premier registre récemment modifié pour s'identifier ; ledit premier registre étant nécessaire à l'utilisation dudit logiciel et à l'identification de l'appareil.

Le premier registre peut être altéré dès la première modification du deuxième registre, cette altération rendant inopérante la fonctionnalité importante du logiciel d'identification auprès du réseau, notamment auprès de(s) serveur(s). L'appareil, après que le premier registre aura cessé d'être altéré par les écritures sur le deuxième registre, mais avant d'être redémarré devra donc repeupler ce premier registre si nécessaire et en informer le serveur ou les autres appareils ou les autres fonctionnalités de l'appareil avec lequel il peut communiquer.

### Dispositif

L'invention a également pour objet un dispositif pour sécuriser l'utilisation d'un logiciel destiné à être exécuté par un processeur électronique d'un appareil, notamment pour la mise en œuvre du procédé selon l'invention, le dispositif étant incorporé dans ou ayant accès audit processeur électronique, et comprenant ou ayant accès au moins à un premier registre sur lequel se trouve au moins une information associée préalablement générée et nécessaire pour accéder à des données utilisées par ledit logiciel et/ou pour crypter ou décrypter des données de communication avec un autre appareil destinées au ou issues du logiciel, et à un deuxième registre contenant un fichier du logiciel et/ou des données nécessaires à l'identification ou au cryptage d'un fichier dudit logiciel, notamment un hash, le dispositif comportant au moins un circuit électronique configuré de telle sorte que, lors de toute modification du deuxième registre ou toute requête en modification dudit deuxième registre, le premier registre soit réinitialisé ou ladite au moins une information associée du premier registre soit modifiée de façon prédéfinie, de telle sorte que, afin d'accéder à des données utilisées par et/ou issues dudit logiciel, une modification ultérieure du premier registre soit autorisée suite à cette réinitialisation ou à cette première modification par une instruction du logiciel ayant initié la modification du deuxième registre.

Le circuit électronique est avantageusement configuré pour détecter l'application, en un point prédéfini du circuit électronique, d'une première tension prédéfinie indiquant la modification du deuxième registre ou une requête en modification, et pour appliquer, suite à cette détection, une deuxième tension prédéfinie en un autre point prédéfini du circuit électronique, l'application de ladite deuxième tension provoquant la réinitialisation du premier registre ou la modification de façon prédéfinie de ladite au moins une information associée du premier registre.

Le circuit électronique est de préférence configuré de telle sorte que la modification du deuxième registre soit permise uniquement si tous les bits du premier registre sont égaux à zéro, cette condition étant vérifiée par une lecture préalable du premier registre et l'enregistrement de la plus grande valeur des bits lus, notamment enregistrée ou calculée sur un troisième registre compris ou auquel a accès le dispositif, la modification du deuxième registre étant empêchée si la valeur enregistrée, après lecture du premier registre, est égale à un.

Le dispositif selon l'invention comprend:
- un premier registre mémoire et un deuxième registre mémoire, dits de sureté et exécutables, tels que décrits précédemment, et, de préférence :
- des registres mémoire pour chacun des logiciels dont la protection est assurée,
   et, de préférence,
- un registre exécutable et un registre de sureté supplémentaires permettant l'inscription sur de tels registres et leur vérification avant d'être désignés comme utilisables, ainsi qu'un registre dit registre commutateur,
- un module configuré pour générer des nombres aléatoires, des clés symétriques et des clés à usage unique, et/ou
- un module configuré pour générer des paires de clés asymétriques, et/ou
- un module configuré pour calculer des hash,
- un module configuré pour calculer et/ou vérifier des signatures électroniques, notamment utilisant des clés symétriques, asymétriques ou des hash aléatoires,
- un module configuré pour crypter et décrypter en utilisant des clés symétriques, à usage unique ou asymétriques, et
- un module configuré pour contrôler l'intégrité physique des circuits électriques et composants électroniques.

Une panne ou une erreur logiciel ou matériel pouvant entrainer la corruption d'un des fichiers exécutables, registres exécutables ou registres de sureté, au moins un logiciel sécurisé par l'appareil et son registre de sureté associé, notamment celui qui permet d'installer les autres logiciels ainsi que ses informations associées, est avantageusement codé sur une mémoire de préférence ineffaçable, notamment de type ROM, et de préférence inaccessible aux processeurs mais copiable sur l'un des registres exécutables et de sureté. Ceci permet ainsi d'établir une connexion sécurisée avec un serveur qui peut alors commander la mise à jour dudit logiciel et l'installation éventuelle d'autres logiciels.

Le dispositif selon l'invention comporte aussi, de préférence, un moyen de protection physique pour que le contenu de certains des registres mémoires de l'appareil, notamment les premiers registres dits de sureté, ne soit pas observable même avec des moyens d'observation sophistiqués, tels que par exemple des microscopes électroniques ou par court-circuitage de certains circuits électroniques, sans que l'accès requis pour de telles actions ne déclenche l'effacement desdits registres.

Pour éviter que le ou les processeurs et la mémoire qu'il(s) utilise soit remplacé par d'autres et accèdent aux fonctionnalités du registre de sureté, celui-ci ainsi que le ou les processeurs liés à l'appareil et la mémoire utilisée par lesdits processeurs sont de préférence agencés pour que tout modification physique dudit processeur ou toute modification physique de la mémoire, ou toute perturbation électrique soient détectées et entrainent l'effacement du premier registre, dit de sureté.

Le dispositif selon l'invention peut faire circuler des courants dans des microcircuits entourant lesdits processeurs et registres mémoire, de préférence lorsque ceux-ci sont mis sous tension, et mesurer l'intensité desdits courants et/ou l'inductance de chacun de ces circuits et/ou la capacitance entre chacun ou certains de ces circuits, et/ou le temps mis par un signal électrique pour parcourir le ou les circuits. Toute variation de l'une de ces mesures ou toute variation par rapport à un état de référence peuvent indiquer une modification physique en vue probablement d'accéder aux circuits des processeurs ou de la mémoire. Le dispositif peut aussi comporter un accumulateur électrique ou une pile électrique configuré pour réaliser ces vérifications quand le circuit n'est pas sous tension.

Avantageusement, le dispositif peut inscrire, lors de la mise en œuvre du procédé selon l'invention dans le cas d'une communication de message(s), l'identité, et notamment le nom, l'éditeur et la version du logiciel notamment si ces informations sont inscrites sur le deuxième registre; cette inscription pouvant se faire par l'ajout d'entêtes aux messages communiqués, cet entête faisant alors avantageusement partie du message sur lequel porte le cryptage ou la signature électronique.

Les caractéristiques énoncées ci-dessus pour le procédé s'appliquent au dispositif, et vice versa.

### Produits programme d'ordinateur

L'invention a également pour objet un produit programme d'ordinateur pour la sécurisation de l'utilisation d'un logiciel destiné à être exécuté par un processeur électronique, ledit processeur électronique comprenant ou de préférence ayant accès à des fonctionnalités de cryptage et/ou décryptage et/ou vérification de signatures électroniques nécessitant des clés digitales enregistrées sur un premier registre dit registre de sécurité qui est effacé lors de toute modification d'un second registre dit registre exécutable sur lequel le code du logiciel sécurisé est inscrit ou sur lequel un hash ou un hash aléatoire éventuellement crypté présent sur le deuxième registre dit registre exécutable est utilisé pour vérifier l'authenticité du logiciel avant ou au cours de son exécution.

L'invention a également pour objet un produit programme d'ordinateur pour la mise en œuvre du procédé de sécurisation de l'utilisation d'un logiciel destiné à être exécuté par un processeur électronique d'un appareil selon l'invention, ledit processeur électronique comprenant ou ayant accès au moins à un premier registre sur lequel se trouve au moins une information associée préalablement générée et nécessaire pour accéder à des données utilisées par ledit logiciel et/ou pour crypter ou décrypter des données de communication avec un autre appareil destinées au ou issues du logiciel, et à un deuxième registre contenant au moins un fichier du logiciel et/ou des données nécessaires à l'identification ou au cryptage d'un fichier dudit logiciel, notamment un hash,
le produit programme d'ordinateur comportant un support et enregistrées sur ce support des instructions lisibles par un processeur pour que, lorsqu'exécutées, lors de toute modification du deuxième registre ou toute requête en modification dudit deuxième registre, le premier registre est réinitialisé ou ladite au moins une information associée du premier registre est modifiée de façon prédéfinie, de telle sorte que, afin d'accéder à des données utilisées par et/ou issues dudit logiciel, une modification ultérieure du premier registre soit autorisée suite à cette réinitialisation ou à cette première modification par une instruction du logiciel ayant initié la modification du deuxième registre ou par un logiciel autorisé déterminé au préalable.

Les caractéristiques énoncées ci-dessus pour le procédé et le dispositif s'appliquent aux produits programme d'ordinateur.

L'invention concerne aussi un support d'information lisible par un ordinateur, et comportant des instructions d'un produit programme d'ordinateur permettant les fonctionnalités mentionnées ci-dessus.

### Appareil et applications de l'invention

L'appareil peut être tout appareil électronique comportant au moins un processeur électronique.

De préférence, tous les logiciels exécutés par l'appareil sont démarrés en utilisant le procédé selon l'invention. Si des logiciels sont autorisés à être exécutés sans avoir été démarrés selon le procédé, ceux ayant accès au dispositif de sécurisation sont de préférence installés dans une partie virtuelle du processeur protégée, tant en lecture qu'en écriture de mémoire, des actions possibles des logiciels qui n'ont pas été démarrés par ledit dispositif de sécurisation.

Des identifiants des autres logiciels exécutés par l'appareil, et notamment ceux démarrés par l'appareil, sont aussi avantageusement transmis avec toute communication, ainsi qu'éventuellement leur hash ou leur hash aléatoire ; un diapositif distant pouvant alors éventuellement vérifier que tous ces logiciels ont été vérifiés pour ne pas poser de problème de sécurité.

Le dispositif peut servir notamment :
- à sécuriser les échanges d'information avec un serveur de données distant ,
- à transporter des données et les échanger avec d'autres appareils similaires connectés au même serveur ou à des serveurs connectés ensemble,
- à faire des mesures puis les communiquer à un serveur distant, ces mesures pouvant être par exemple :
   o des mesures physiques de pression, de température, de chaleur, de dimension, ou autres,
   o Des mesures métrologiques telles que la température atmosphérique, la vitesse et direction du vent la pluviométrie ou la hauteur de vagues,
   o des mesures de consommation telles que des quantités d'électricité passant dans un câble, ou quantité de chaleur dans un tuyau de chauffage, ou d'eau dans une conduite d'eau,
   o des mesures d'utilisation de pièces situées dans des machine ou de machines elles même,
   o des mesures de géolocalisation,
   o des mesures cinématiques telles que la vitesse ou l'accélération et la direction d'un véhicule,
- à sécuriser des transmissions de données depuis et vers un serveur,
- à retransmettre des images vidéo ou des sons vers un serveur,
- à retransmettre vers un serveur les identités de puces RFID passant dans son champ de 'vision', ou
- à contrôler depuis un serveur ou un autre objet connecté au dit serveur une serrure de porte ou fenêtre.
- Sécuriser les micrologiciels de routeurs de réseaux.
- Sécuriser les micrologiciels de cartes à puces
- Sécuriser les micrologiciels de lecteurs ou lecteurs multiples de carte à puce, avec ou sans contact.

### Brève description des dessins

L'invention pourra être mieux comprise à la lecture de la description détaillée qui va suivre, d'exemples de mise en œuvre non limitatifs de celle-ci, et à l'examen du dessin annexé, sur lequel :
[Fig 1] la figure 1 représente un exemple de dispositif pour sécuriser l'utilisation d'un logiciel selon l'invention,
[Fig 2] la figure 2 représente une variante de dispositif pour sécuriser l'utilisation d'un logiciel selon l'invention,
[Fig 3] la figure 3 représente un exemple de contenus du registre commutateur selon l'invention,
[Fig 4] la figure 4 représente un exemple d'étapes d'utilisation d'un dispositif selon l'invention, et
[Fig 5] la figure 5 représente un autre exemple d'étapes d'utilisation d'un dispositif selon l'invention.

### Description détaillée

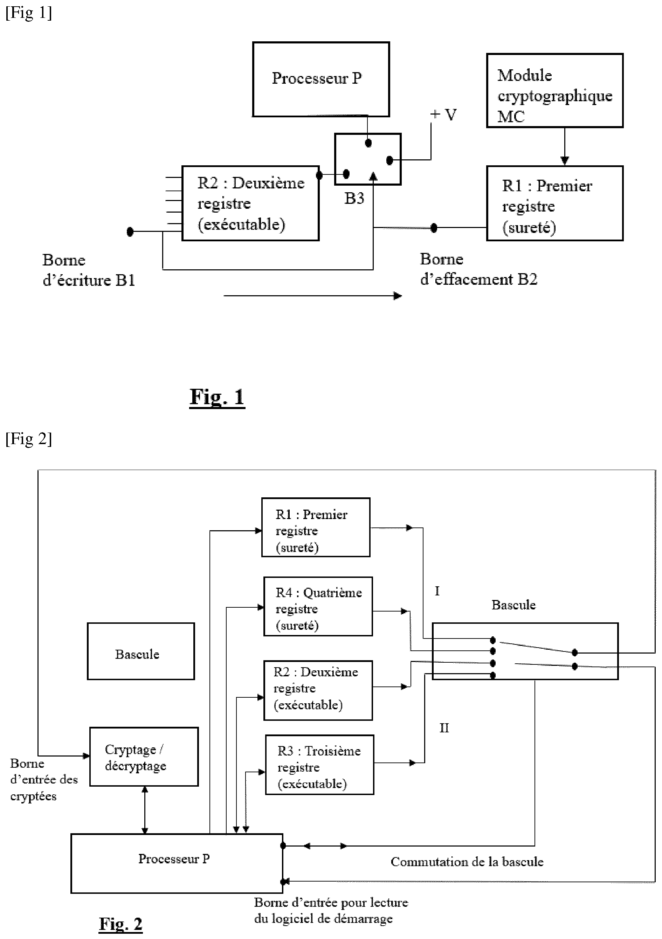

On a illustré à la figure 1 un exemple de dispositif selon l'invention, pour la sécurisation de la mise à jour d'un logiciel destiné à être exécuté par un processeur électronique P d'un appareil.

Dans cet exemple, le logiciel est un logiciel de démarrage du processeur P, et un fichier du logiciel, sa signature, une clé de cryptage pour décrypter un fichier dudit logiciel enregistré sous forme cryptée sont enregistrés dans un deuxième registre R2 dit exécutable, auquel le processeur électronique P a accès. Ce dernier a également accès à un module cryptographique MC qui peut lire un premier registre R1 dit de sureté, sur lequel se trouve au moins une information associée préalablement générée et nécessaire pour accéder à des données utilisées par ledit logiciel et/ou pour crypter ou décrypter des données de communication avec un autre appareil destinées au ou issues du logiciel. Le Processeur P a aussi un accès direct en écriture sur le registre de sureté mais n'a pas d'accès en lecture directe.

Une tension appliquée à la borne d'écriture B1 permettant d'écrire sur le registre R2 exécutable entraine l'application d'une tension sur la borne B2 d'effacement du registre de sureté R1.

Le logiciel étant chargé dans le processeur et communiquant avec un serveur peut, pour effectuer sa propre mise à jour :
- Télécharger la nouvelle version et sa signature
- vérifier la nouvelle version en recopiant ladite nouvelle version dans le module cryptographique pour que celui-ci :
   o décrypte la signature en utilisant la clé publique de l'éditeur inscrite sur le registre e sureté
   o calcule le hash du logiciel
   o compare le hash et la signature décryptée
- Télécharger des nouvelles clés de cryptage pour communiquer avec le serveur après la mise à jour, et une éventuelle nouvelle clé publique de l'éditeur de logiciels
- vérifier la nouvelle version des clés de cryptage en recopiant ladite nouvelle version dans le module cryptographique pour que celui-ci :
   o décrypte la signature en utilisant la clé publique du serveur inscrite sur le registre de sureté
   o calcule le hash des clés
   o compare le hash et la signature décryptée
- Recopier le logiciel téléchargé sur le registre exécutable R2
- Eventuellement recopier la nouvelle signature sur le registre de sureté R1
- Recopier les nouvelles clés de cryptage pour communiquer avec le serveur sur le registre de sureté R1
- Initialiser le redémarrage du processeur

### Démarrage du processeur

Le processeur P démarre en chargeant le logiciel présent dans le registre exécutable R2.

### Communication avec le serveur

Pour envoyer des données sécurisées au serveur, le processeur P envoie les données non sécurisées au module cryptographique qui les lui retourne sécurisées c'est-à-dire par exemple cryptées et signées, et que le processeur envoie par la suite au serveur via un réseau de données tel que internet.

Pour recevoir des données sécurisées du serveur, le processeur envoie les données qu'il a reçu sécurisées par l'intermédiaire d'un réseau de données tel que internet, au module cryptographique qui les lui retourne décryptées ayant vérifié leur signature éventuelle.

Dans un deuxième exemple illustré à la figure 2, pour éviter que l'appareil puisse ne plus fonctionner s'il est arrêté entre l'effacement du premier registre R1 de sureté et l'écriture sur celui-ci de données modifiées et valides, le dispositif selon l'invention a également accès à un troisième registre R3, dit « exécutable bis », sur lequel peut être enregistré un fichier du logiciel ou une clé permettant de le décrypter et/ou de vérifier sa signature , et un quatrième registre R4, dit « de sureté bis », dont les informations associées sont modifiées lors de toute mise à jour du second registre R2, ainsi qu'une bascule et un registre commutateur R5 indiquant choisissant duquel registre exécutable R2 ou R3 et duquel registre de sureté R1 ou R4 les informations doivent provenir pour respectivement démarrer le logiciel ou renseigner le module cryptographie en clés cryptographique et autres valeurs conservés dans le registre de sureté.

Le processeur peut choisir de faire basculer la bascule pour qu'il lise soit les registres R1 et R4 soit les registres R2 et R3. Le basculement de ladite bascule est rémanent, c'est-à-dire que le choix de l'une ou l'autre paire de registres ne change pas même si le processeur est arrêté ou les circuits sont mis hors tension. Seule une instruction du processeur permettant de changer ce choix. De préférence la bascule peut aussi renseigner le processeur sur le choix sur lequel il a été positionné.

### Démarrage du processeur

Le processeur démarre en lisant le code fourni par la bascule en provenance de l'un des deux registres exécutables.

### Mise à jour du processeur :

Le processeur :
- Télécharge la nouvelle version du logiciel ainsi que sa signature électronique et de nouvelles clés pour communiquer avec le serveur après la mise à jour.
- Transfert le nouveau logiciel et la signature électronique au module de cryptage
- Le module de cryptage décrypte le logiciel et les nouvelles clés de cryptage et leurs signatures à l'aide respectivement d'une clé symétrique et d'une clé publique émise par l'émetteur dudit logiciel pour ledit logiciel et par le serveur pour les données de cryptage, présentes sur le registre de sureté avec lequel la bascule permet de communiquer.
- Le module de décryptage renvoie le logiciel décrypté, et vérifié pour avoir été signé par l'éditeur dont la clé publique est sur le registre de sécurité ainsi que les données de cryptage de même décryptées et dont l'origine a été vérifiée.
- Le processeur inscrit alors sur le registre exécutable non utilisé ainsi que sur le registre de sureté non utilisé la nouvelle version du logiciel et les nouvelles données de cryptages et hash de la nouvelle version du logiciel.
- Le processeur vérifie que l'inscription faite à l'étape précédente ne comporte pas d'erreur d'écriture
- Le processeur actionne la bascule
- Le processeur redémarre.

### Communication du processeur avec le serveur :

Pour envoyer des données sécurisées au serveur, le processeur envoie les données non sécurisées au module cryptographique qui les lui retourne sécurisées c'est-à-dire par exemple cryptées et signées, et que le processeur envoie par la suite au serveur via un réseau de données tel que internet.

Pour recevoir des données sécurisées du serveur, le processeur envoie les données qu'il a reçu sécurisées par l'intermédiaire d'un réseau de données tel que internet, au module cryptographique qui les lui retourne décryptées ayant vérifié leur signature éventuelle.

Le module cryptographique interroge le registre de sureté auquel il est lié par la bascule pour connaitre les clés et autres paramètres à utiliser pour les opérations de cryptage, décryptage et de certification.

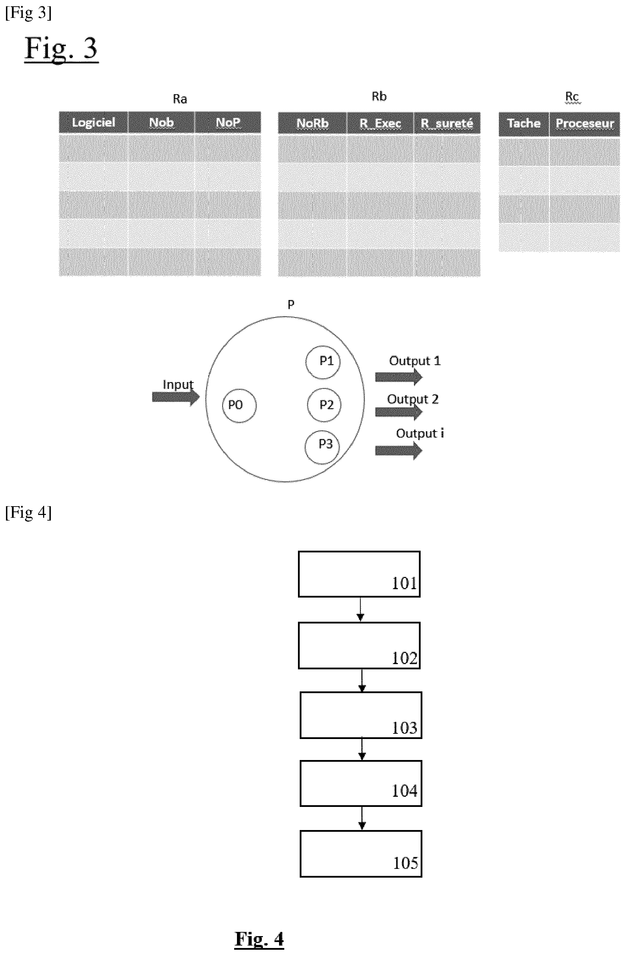

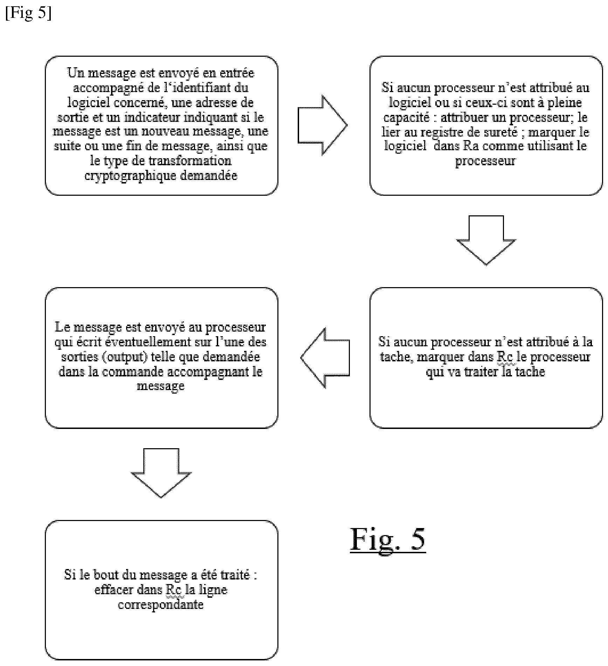

Dans le mode de réalisation illustré à la figure 3 un processeur indépendant P0 gère les entrées/ sorties du dispositif de sécurité, l'attribution des modules cryptographiques P1, P2, ..,Pi aux divers taches de cryptographies et assure la gestion des registres exécutables et de sureté ; le dispositif disposant de plusieurs modules cryptographiques pouvant travailler simultanément comme décrit à la figure 5.

Le dispositif comporte en particulier trois registres Ra, Rb, Rc organisés sous forme de tables, les registres Ra et Rb étant permanents et le registre Rc étant permanant si un traitement cryptographique peut être effectué de part et d'autre d'une coupure d'alimentation.

Le Registre Ra associe à un logiciel d'une part le numéro de la ligne du registre Rb dans lequel son registre exécutable et son registre de sureté se trouvent d'autre part la liste des modules cryptographiques traitant des données pour ledit logiciel. Le Registre Rc répertorie les taches de traitement cryptographiques en cours et indique pour chaque tache le numéro du module cryptographique qui qui fait les calculs. Un croisement des tables Ra et Rc permet donc de retrouver l'identifiant du logiciel qui a initié chacune des taches cryptographiques.

On illustre à la figure 4, un exemple de gestion des registres exécutables et de sureté, par le processeur qui se voit confier par un processeur principal externe la tâche d'enregistrer un logiciel dans le dispositif.

A une étape 101, il est vérifié que le logiciel demandant l'installation est bien l'un des logiciels démarrés à partir d'un des registres exécutables des tables Ra et Rb, en demandant de décrypter un nombre aléatoire avec une clé conservée dans le processeur P0, générée et communiquée au logiciel lors de son démarrage; puis que le logiciel a le droit d'inscrire un nouveau logiciel dans le dispositif ou d'en modifier une version enregistrée. Le logiciel enregistré sur le premier registre exécutable peut par exemple être l'unique logiciel autorisé à modifier ou installer d'autres logiciels. A une étape 102, le dispositif cherche dans Rb une ligne libre. Dans une étape 103, le dispositif écrit sur la ligne libre du registre Rb le code du logiciel e les données de sureté. A une étape 104, les informations sont à nouveau envoyées vers le registre Rb pour vérification. Dans une étape 105, le numéro de la ligne du registre utilisée est inscrit dans la colonne Nob du registre Ra pour l'enregistrement correspondant au logiciel, ou, si le logiciel n'y est pas encore répertorié, sur une ligne libre du registre Ra, l'identifiant du logiciel y étant aussi inscrit. Le logiciel mis à jour est redémarré s'il était exécuté durant cette mise à jour. Alternativement, cette dernière étape consistant à mettre à jour le registre Ra n'est effectuée que si le logiciel mis à jour n'est pas en train d'être exécuté, la mise à jour dudit registre Ra n'intervenant alors que lors de l'arrêt dudit logiciel.

Si seule la signature ou le hash du logiciel ou bien le hash du logiciel mélangé à un nombre secret est inscrite dans un registre exécutable et non un fichier du logiciel, l'adéquation de la signature, ou du hash enregistré dans ledit registre exécutable est de préférence systématiquement vérifiée avant le démarrage dudit logiciel. La clé publique de l'éditeur de la signature dudit logiciel peut avoir été enregistrée sur le registre de sureté, ainsi que, le cas échéant, le nombre secret de mélange, au moment de la mise à jour du logiciel et l'emplacement du fichier du logiciel renseigné sur le registre exécutable. Pour éviter que le processeur n'essaie de multiples fois de contourner la vérification en utilisant des nombres aléatoires au hasard, on limite de préférence le nombre d'essais de vérifications dans le temps.

La figure 5 représente les divers étapes du procédé par lequel le dispositif répond à la demande d'un logiciel sécurisé par ledit dispositif en faisant des opération des opérations cryptographiques.

## Revendications

1. Procédé pour sécuriser l'utilisation d'un logiciel destiné à être exécuté par un processeur électronique d'un appareil, ledit processeur électronique comprenant ou ayant accès au moins à
- un premier registre (R1) sur lequel se trouve au moins une information associée préalablement générée et nécessaire pour accéder à des données utilisées par ledit logiciel et/ou pour crypter ou décrypter des données de communication avec un autre appareil destinées au ou issues du logiciel, et à
- un deuxième registre (R2) contenant au moins un fichier du logiciel et/ou des données nécessaires à l'identification ou au cryptage d'un fichier dudit logiciel, notamment un hash,
procédé dans lequel, lors de toute modification du deuxième registre (R2) ou toute requête en modification dudit deuxième registre, le premier registre (R1) est réinitialisé ou ladite au moins une information associée du premier registre est modifiée de façon prédéfinie, de telle sorte que, afin d'accéder à des données utilisées par et/ou issues dudit logiciel, une modification ultérieure du premier registre (R1) soit autorisée suite à cette réinitialisation ou à cette première modification par une instruction du logiciel ayant initié la modification du deuxième registre (R2) ou par un logiciel autorisé déterminé au préalable, le procédé étant **caractérisé en ce que**,
il utilise un circuit électronique, incorporé dans ou connecté audit processeur électronique, configuré au moins pour détecter toute modification du deuxième registre (R2) ou toute requête en modification dudit deuxième registre, et pour, suite à cette détection, réinitialiser le premier registre (R1) ou modifier d'une façon prédéfinie ladite au moins une information associée du premier registre.

2. Procédé selon la revendication 1, dans lequel le premier registre (R1) est remis à zéro lors de toute modification du deuxième registre (R2) ou toute requête de modification dudit deuxième registre.

3. Procédé selon l'une quelconque des revendications précédentes, dans lequel ladite au moins une information associée du premier registre (R1) est modifiée par une valeur connue ou générée par ledit processeur électronique de l'appareil, ou par une valeur transmise à l'appareil, ou par une valeur connue au préalable et/ou transmise à un serveur ou à un autre appareil d'un réseau au sein duquel l'appareil évolue.

4. Procédé selon l'une quelconque des revendications précédentes, dans lequel ladite au moins une information associée du premier registre (R1) comporte au moins une ou plusieurs clés de cryptage, notamment des clés symétrique, asymétriques, publiques, privées, ou des séries de clés à usage unique, ou comporte au moins un ou plusieurs nombres ayant été générés aléatoirement.

5. Procédé selon l'une quelconque des revendications précédentes, dans lequel ledit logiciel est un logiciel de démarrage du processeur électronique.

6. Procédé selon l'une quelconque des revendications précédentes, dans lequel, un fichier du logiciel étant enregistré sous forme cryptée sur un troisième registre (R3), le deuxième registre (R2) comporte au moins une ou plusieurs clés de cryptage servant au décryptage et/ou à la vérification de la signature dudit fichier crypté, notamment une clé symétrique ou asymétrique.

7. Procédé selon l'une quelconque des revendications précédentes, dans lequel seul un logiciel de gestion ou le logiciel dont un fichier est contenu dans le deuxième registre (R2) ou dans un troisième registre (R3) est autorisé à modifier ou est capable de modifier ledit deuxième registre (R2).

8. Procédé selon l'une quelconque des revendications 1 à 5, dans lequel seul le logiciel dont un fichier est contenu dans le deuxième registre (R2) ou dont la signature est inscrite sur le deuxième registre est autorisé à modifier ou est capable de modifier ledit deuxième registre (R2).

9. Procédé selon l'une quelconque des revendications 1 à 5, dans lequel, un fichier du logiciel étant enregistré sur un troisième registre, le premier registre (R1) comporte au moins une clé de cryptage et un nombre secret aléatoire ayant été mélangé ou concaténé au fichier du logiciel enregistré dans le troisième registre, et le deuxième registre comporte en outre au moins un mot haché, crypté au moyen de ladite clé de cryptage contenue dans le premier registre, du fichier résultant du mélange ou de la concaténation.

10. Procédé selon l'une quelconque des revendications précédentes, dans lequel, le logiciel étant un logiciel de gestion assurant la gestion d'un ou plusieurs autres logiciels tiers, le processeur électronique de l'appareil comporte ou a accès à un registre bascule (R5), contenant au moins, pour chacun de ces autres logiciels tiers, l'identifiant des premier et deuxième registres de chacun de ces logiciels.

11. Procédé selon l'une quelconque des revendications précédentes, dans lequel ladite au moins une information associée du premier registre est utilisée pour l'identification dudit processeur dans un réseau au sein duquel évolue l'appareil.

12. Dispositif pour sécuriser l'utilisation d'un logiciel destiné à être exécuté par un processeur électronique d'un appareil, notamment pour la mise en œuvre du procédé selon l'une quelconque des revendications précédentes, le dispositif étant incorporé dans ou ayant accès audit processeur électronique, et comprenant ou ayant accès au moins à un premier registre (R1) sur lequel se trouve au moins une information associée préalablement générée et nécessaire pour accéder à des données utilisées par ledit logiciel et/ou pour crypter ou décrypter des données de communication avec un autre appareil destinées au ou issues du logiciel, et à un deuxième registre (R2) contenant un fichier du logiciel et/ou des données nécessaires à l'identification ou au cryptage d'un fichier dudit logiciel, notamment un hash,
le dispositif comportant au moins un circuit électronique configuré de telle sorte que, lors de toute modification du deuxième registre (R2) ou toute requête en modification dudit deuxième registre, le premier registre (R1) soit réinitialisé ou ladite au moins une information associée du premier registre soit modifiée de façon prédéfinie, de telle sorte que, afin d'accéder à des données utilisées par et/ou issues dudit logiciel, une modification ultérieure du premier registre (R1) soit autorisée suite à cette réinitialisation ou à cette première modification par une instruction du logiciel ayant initié la modification du deuxième registre (R2) ou par un logiciel autorisé déterminé au préalable,
ledit circuit électronique étant incorporé dans ou connecté audit processeur électronique, et étant configuré au moins pour détecter toute modification du deuxième registre (R2) ou toute requête en modification dudit deuxième registre, et pour, suite à cette détection, réinitialiser le premier registre (R1) ou modifier d'une façon prédéfinie ladite au moins une information associée du premier registre.

13. Dispositif selon la revendication précédente, dans lequel le circuit électronique est configuré pour détecter l'application, en un point prédéfini du circuit électronique, d'une première tension prédéfinie indiquant la modification du deuxième registre (R2) ou une requête en modification, et pour appliquer, suite à cette détection, une deuxième tension prédéfinie en un autre point prédéfini du circuit électronique, l'application de ladite deuxième tension provoquant la réinitialisation du premier registre ou la modification de façon prédéfinie de ladite au moins une information associée du premier registre.

14. Produit programme d'ordinateur pour la mise en œuvre du procédé, tel que défini à l'une quelconque des revendications 1 à 11, de sécurisation de l'utilisation d'un logiciel destiné à être exécuté par un processeur électronique d'un appareil, ledit processeur électronique comprenant ou ayant accès au moins à un premier registre (R1) sur lequel se trouve au moins une information associée préalablement générée et nécessaire pour accéder à des données utilisées par ledit logiciel et/ou pour crypter ou décrypter des données de communication avec un autre appareil destinées au ou issues du logiciel, et à un deuxième registre (R2) contenant au moins un fichier du logiciel et/ou des données nécessaires à l'identification ou au cryptage d'un fichier dudit logiciel, notamment un hash,
le produit programme d'ordinateur comportant un support et enregistrées sur ce support des instructions lisibles par un processeur pour que, lorsqu'exécutées, lors de toute modification du deuxième registre (R2) ou toute requête en modification dudit deuxième registre, le premier registre (R1) est réinitialisé ou ladite au moins une information associée du premier registre est modifiée de façon prédéfinie, de telle sorte que, afin d'accéder à des données utilisées par et/ou issues dudit logiciel, une modification ultérieure du premier registre (R1) soit autorisée suite à cette réinitialisation ou à cette première modification par une instruction du logiciel ayant initié la modification du deuxième registre (R2) ou par un logiciel autorisé déterminé au préalable.

## Patentansprüche

1. Verfahren zur Absicherung der Verwendung einer Software, die dazu bestimmt ist, von einem elektronischen Prozessor eines Geräts ausgeführt zu werden, wobei der elektronische Prozessor wenigstens Folgendes umfasst oder darauf Zugriff hat
- ein erstes Register (R1), in dem sich wenigstens eine zugehörige Information befindet, die vorab erzeugt und erforderlich ist, um auf Daten zuzugreifen, die von der Software genutzt werden, und/oder Daten der Kommunikation mit einem anderen Gerät zu verschlüsseln oder zu entschlüsseln, die für die Software bestimmt sind oder von dieser stammen, und
- ein zweites Register (R2), das wenigstens eine Datei der Software und/oder Daten enthält, die zur Identifizierung oder Verschlüsselung einer Datei der Software erforderlich sind, insbesondere einen Hash,
wobei bei dem Verfahren bei jeder Änderung des zweiten Registers (R2) oder jeder Anfrage zur Änderung des zweiten Registers das erste Register (R1) zurückgesetzt oder die wenigstens eine zugehörige Information des ersten Registers auf vorgegebene Weise geändert wird, so dass zum Zugriff auf Daten, die von der Software genutzt werden und/oder von dieser stammen, eine spätere Änderung des ersten Registers (R1) nach diesem Zurücksetzen oder dieser ersten Änderung durch eine Anweisung der Software, die die Änderung des zweiten Registers (R2) eingeleitet hat, oder durch eine vorab bestimmte autorisierte Software erlaubt ist, wobei das Verfahren **dadurch gekennzeichnet ist, dass**
es einen elektronischen Schaltkreis verwendet, der im elektronischen Prozessor aufgenommen oder mit diesem verbunden ist, der wenigstens dazu ausgebildet ist, jede Änderung des zweiten Registers (R2) oder jede Anfrage zur Änderung des zweiten Registers zu detektieren, und, nach dieser Detektion, das erste Register (R1) zurückzusetzen oder die wenigstens eine zugehörige Information des ersten Registers auf eine vorgegebene Weise zu ändern.

2. Verfahren nach Anspruch 1, wobei das erste Register (R1) bei jeder Änderung des zweiten Registers (R2) oder jeder Anfrage zur Änderung des zweiten Registers auf Null zurückgesetzt wird.

3. Verfahren nach einem der vorhergehenden Ansprüche, wobei die wenigstens eine zugehörige Information des ersten Registers (R1) durch einen Wert, der bekannt ist oder vom elektronischen Prozessor des Geräts erzeugt wird, oder durch einen an das Gerät übertragenen Wert oder durch einen Wert, der vorab bekannt ist und/oder an einen Server oder ein anderes Gerät eines Netzwerks übertragen wird, in dem sich das Gerät bewegt, geändert wird.

4. Verfahren nach einem der vorhergehenden Ansprüche, wobei die wenigstens eine zugehörige Information des ersten Registers (R1) wenigstens einen oder mehrere Verschlüsselungsschlüssel beinhaltet, insbesondere symmetrische, asymmetrische, öffentliche, private Schlüssel oder Reihen von Schlüsseln zur einmaligen Nutzung, oder wenigstens eine oder mehrere Zahlen beinhaltet, die zufällig erzeugt wurden.

5. Verfahren nach einem der vorhergehenden Ansprüche, wobei die Software eine Startsoftware des elektronischen Prozessors ist.

6. Verfahren nach einem der vorhergehenden Ansprüche, wobei, da eine Datei der Software in verschlüsselter Form in einem dritten Register (R3) gespeichert ist, das zweite Register (R2) wenigstens einen oder mehrere Verschlüsselungsschlüssel beinhaltet, die der Entschlüsselung und/oder Überprüfung der Signatur der verschlüsselten Datei dienen, insbesondere einen symmetrischen oder asymmetrischen Schlüssel.

7. Verfahren nach einem der vorhergehenden Ansprüche, wobei nur eine Verwaltungssoftware oder die Software, von der eine Datei im zweiten Register (R2) oder in einem dritten Register (R3) enthalten ist, das zweite Register (R2) ändern darf oder kann.

8. Verfahren nach einem der Ansprüche 1 bis 5, wobei nur die Software, von der eine Datei im zweiten Register (R2) enthalten ist oder deren Signatur im zweiten Register eingetragen ist, das zweite Register (R2) ändern darf oder kann.

9. Verfahren nach einem der Ansprüche 1 bis 5, wobei, da eine Datei der Software in einem dritten Register gespeichert ist, das erste Register (R1) wenigstens einen Verschlüsselungsschlüssel und eine zufällige Geheimzahl beinhaltet, die mit der Datei der Software, die im dritten Register gespeichert ist, vermischt oder verkettet wurde, und das zweite Register ferner wenigstens ein gehashtes Wort, das mittels des Verschlüsselungsschlüssels verschlüsselt wurde, der im ersten Register enthalten ist, der Datei beinhaltet, die aus der Vermischung oder Verkettung hervorgeht.

10. Verfahren nach einem der vorhergehenden Ansprüche, wobei, da die Software eine Verwaltungssoftware ist, die die Verwaltung einer oder mehrerer anderer Drittsoftware(s) sicherstellt, der elektronische Prozessor des Geräts ein Flipflop-Register (R5) beinhaltet oder darauf Zugriff hat, das für jede dieser anderen Drittsoftware(s) wenigstens die Kennung des ersten und zweiten Registers jeder dieser Softwares enthält.

11. Verfahren nach einem der vorhergehenden Ansprüche, wobei die wenigstens eine zugehörige Information des ersten Registers zur Identifizierung des Prozessors in einem Netzwerk verwendet wird, in dem sich das Gerät bewegt.

12. Vorrichtung zur Absicherung der Verwendung einer Software, die dazu bestimmt ist, von einem elektronischen Prozessor eines Geräts ausgeführt zu werden, insbesondere für die Durchführung des Verfahrens nach einem der vorhergehenden Ansprüche, wobei die Vorrichtung im elektronischen Prozessor aufgenommen ist oder darauf Zugriff hat und wenigstens ein erstes Register (R1), in dem sich wenigstens eine zugehörige Information befindet, die vorab erzeugt und erforderlich ist, um auf Daten zuzugreifen, die von der Software genutzt werden, und/oder Daten der Kommunikation mit einem anderen Gerät zu verschlüsseln oder zu entschlüsseln, die für die Software bestimmt sind oder von dieser stammen, und ein zweites Register (R2) umfasst oder darauf Zugriff hat, das eine Datei der Software und/oder Daten enthält, die zur Identifizierung oder Verschlüsselung einer Datei der Software erforderlich sind, insbesondere einen Hash,
wobei die Vorrichtung wenigstens einen elektronischen Schaltkreis umfasst, der so ausgebildet ist, dass bei jeder Änderung des zweiten Registers (R2) oder jeder Anfrage zur Änderung des zweiten Registers das erste Register (R1) zurückgesetzt oder die wenigstens eine zugehörige Information des ersten Registers auf vorgegebene Weise geändert wird, so dass zum Zugriff auf Daten, die von der Software genutzt werden und/oder von dieser stammen, eine spätere Änderung des ersten Registers (R1) nach diesem Zurücksetzen oder dieser ersten Änderung durch eine Anweisung der Software, die die Änderung des zweiten Registers (R2) eingeleitet hat, oder durch eine vorab bestimmte autorisierte Software erlaubt ist,
wobei der elektronische Schaltkreis im elektronischen Prozessor aufgenommen oder mit diesem verbunden ist und wenigstens dazu ausgebildet ist, jede Änderung des zweiten Registers (R2) oder jede Anfrage zur Änderung des zweiten Registers zu detektieren, und, nach dieser Detektion, das erste Register (R1) zurückzusetzen oder die wenigstens eine zugehörige Information des ersten Registers auf eine vorgegebene Weise zu ändern.

13. Vorrichtung nach dem vorhergehenden Anspruch, wobei der elektronische Schaltkreis dazu ausgebildet ist, an einem vorgegebenen Punkt des elektronischen Schaltkreises die Anlegung einer ersten vorgegebenen Spannung zu detektieren, die auf die Änderung des zweiten Registers (R2) oder eine Änderungsanfrage hinweist, und nach dieser Detektion eine zweite vorgegebene Spannung an einem anderen vorgegebenen Punkt des elektronischen Schaltkreises anzulegen, wobei die Anlegung der zweiten Spannung die Zurücksetzung des ersten Registers oder die Änderung auf vorgegebene Weise der wenigstens einen zugehörigen Information des ersten Registers bewirkt.

14. Computerprogrammprodukt für die Durchführung des Verfahrens nach einem der Ansprüche 1 bis 11 zur Absicherung der Verwendung einer Software, die dazu bestimmt ist, von einem elektronischen Prozessor eines Geräts ausgeführt zu werden, wobei der elektronische Prozessor wenigstens ein erstes Register (R1), in dem sich wenigstens eine zugehörige Information befindet, die vorab erzeugt und erforderlich ist, um auf Daten zuzugreifen, die von der Software genutzt werden, und/oder Daten der Kommunikation mit einem anderen Gerät zu verschlüsseln oder zu entschlüsseln, die für die Software bestimmt sind oder von dieser stammen, und ein zweites Register (R2) umfasst oder darauf Zugriff hat, das wenigstens eine Datei der Software und/oder Daten enthält, die zur Identifizierung oder Verschlüsselung einer Datei der Software erforderlich sind, insbesondere einen Hash,
wobei das Computerprogrammprodukt einen Träger, und, auf diesem Träger gespeichert, Anweisungen beinhaltet, die von einem Prozessor gelesen werden können, damit bei Ausführung, bei jeder Änderung des zweiten Registers (R2) oder jeder Anfrage zur Änderung des zweiten Registers das erste Register (R1) zurückgesetzt wird oder die wenigstens eine zugehörige Information des ersten Registers auf vorgegebene Weise geändert wird, so dass zum Zugriff auf Daten, die von der Software genutzt werden und/oder von dieser stammen, eine spätere Änderung des ersten Registers (R1) nach diesem Zurücksetzen oder dieser ersten Änderung durch eine Anweisung der Software, die die Änderung des zweiten Registers (R2) eingeleitet hat, oder durch eine vorab bestimmte autorisierte Software erlaubt ist.

## Claims

1. Method for securing the use of software intended to be executed by an electronic processor of a unit, said electronic processor comprising or having access at least to
- a first register (R1) on which there is at least one associated information item previously generated and needed to access data used by said software and/or to encrypt or decrypt communication data with another unit intended for or derived from the software, and to
- a second register (R2) containing at least one file of the software and/or data needed to identify or encrypt a file of said software, notably a hash,
in which method, upon any modification to the second register (R2) or any request to modify said second register, the first register (R1) is reinitialized or said at least one associated information item of the first register is modified in a predefined manner, such that, in order to access data used by and/or derived from said software, a subsequent modification of the first register (R1) is authorized following this reinitialization or this first modification by an instruction of the software having initiated the modification of the second register (R2) or by previously determined authorized software, the method being **characterized in that**
it uses an electronic circuit, incorporated in or connected to said electronic processor, configured at least to detect any modification of the second register (R2) or any request to modify said second register, and to, following this detection, reinitialize the first register (R1) or modify in a predefined manner said at least one associated information item of the first register.

2. Method according to Claim 1, wherein the first register (R1) is reset to zero upon any modification of the second register (R2) or any request to modify said second register.

3. Method according to either one of the preceding claims, wherein said at least one associated information item of the first register (R1) is modified by a value that is known or generated by said electronic processor of the unit, or by a value transmitted to the unit, or by a value that is previously known and/or transmitted to a server or to another unit of a network within which the unit moves around.

4. Method according to any one of the preceding claims, wherein said at least one associated information item of the first register (R1) comprises at least one or more encryption keys, notably symmetrical, asymmetrical, public, private keys, or series of one-time keys, or comprises at least one or more numbers having been generated randomly.

5. Method according to any one of the preceding claims, wherein said software is start-up software of the electronic processor.

6. Method according to any one of the preceding claims, wherein, a file of the software being stored in encrypted form on a third register (R3), the second register (R2) comprises at least one or more encryption keys used in the decryption and/or in the checking of the signature of said encrypted file, notably a symmetrical or asymmetrical key.

7. Method according to any one of the preceding claims, wherein only management software or the software of which a file is contained in the second register (R2) or in a third register (R3) is authorized to modify or is capable of modifying said second register (R2).

8. Method according to any one of Claims 1 to 5, wherein only the software of which a file is contained in the second register (R2) or of which the signature is entered on the second register is authorized to modify or is capable of modifying said second register (R2).

9. Method according to any one of Claims 1 to 5, wherein, a file of the software being stored on a third register, the first register (R1) comprises at least one encryption key and a random secret number having been mixed or concatenated with the file of the software stored in the third register, and the second register further comprises at least one hashed word, encrypted by means of said encryption key contained in the first register, of the file resulting from the mixing or the concatenation.

10. Method according to any one of the preceding claims, wherein, the software being management software ensuring the management of one or more other third-party pieces of software, the electronic processor of the unit comprises or has access to a switch register (R5), containing at least, for each of these other third-party pieces of software, the identifier of the first and second registers of each of these pieces of software.

11. Method according to any one of the preceding claims, wherein said at least one associated information item of the first register is used for the identification of said processor in a network within which the unit moves around.

12. Device for securing the use of software intended to be executed by an electronic processor of a unit, notably for the implementation of the method according to any one of the preceding claims, the device being incorporated in or having access to said electronic processor, and comprising or having access at least to a first register (R1) on which there is at least one associated information item previously generated and needed to access data used by said software and/or to encrypt or decrypt communication data with another unit intended for or derived from the software, and to a second register (R2) containing a file of the software and/or data needed to identify or encrypt a file of said software, notably a hash,
the device comprising at least one electronic circuit configured such that, upon any modification of the second register (R2) or any request to modify said second register, the first register (R1) is reinitialized or said at least one associated information item of the first register is modified in a predefined manner, such that, in order to access data used by and/or derived from said software, a subsequent modification of the first register (R1) is authorized following this reinitialization or this first modification by an instruction of the software having initiated the modification of the second register (R2) or by previously determined authorized software,
said electronic circuit being incorporated in or connected to said electronic processor, and being configured at least to detect any modification of the second register (R2) or any request to modify said second register, and to, following this detection, reinitialize the first register (R1) or modify in a predefined manner said at least one associated information item of the first register.

13. Device according to the preceding claim, wherein the electronic circuit is configured to detect the application, at a predefined point of the electronic circuit, of a first predefined voltage indicating the modification of the second register (R2) or a modification request, and to apply, following this detection, a second predefined voltage at another predefined point of the electronic circuit, the application of said second voltage provoking the reinitialization of the first register or the modification in a predefined manner of said at least one associated information item of the first register.

14. Computer program product for the implementation of the method, as defined in any one of Claims 1 to 11, for securing the use of software intended to be executed by an electronic processor of a unit, said electronic processor comprising or having access at least to a first register (R1) on which there is at least one associated information item previously generated and needed to access data used by said software and/or to encrypt or decrypt communication data with another unit intended for or derived from the software, and to a second register (R2) containing at least one file of the software and/or data needed to identify or encrypt a file of said software, notably a hash,
the computer program product comprising a medium and, stored on this medium, processor-readable instructions so that, when executed, upon any modification of the second register (R2) or any request to modify said second register, the first register (R1) is reinitialized or said at least one associated information item of the first register is modified in a predefined manner, such that, in order to access data used by and/or derived from said software, a subsequent modification of the first register (R1) is authorized following this reinitialization or this first modification by an instruction of the software having initiated the modification of the second register (R2) or by previously determined authorized software.
